# EUROPÄISCHE PATENTSCHRIFT

(11) **EP 2 571 603 B1**
(45) Veröffentlichungstag und Bekanntmachung des Hinweises auf die Patenterteilung: **29.06.2016**
(21) Anmeldenummer: 11723368.4
(22) Anmeldetag: 17.05.2011
(51) Int. Cl.: B01J 23/34, C23C 24/04, B01J 37/02, B01J 23/889, B01J 23/68, B01D 53/86, C23C 4/06, C23C 4/08, C23C 30/00

(54) **BAUTEIL MIT EINER KATALYTISCHEN OBERFLÄCHE, VERFAHREN ZU DESSEN HERSTELLUNG UND VERWENDUNG DIESES BAUTEILS**
COMPONENT HAVING A CATALYTIC SURFACE, METHOD FOR PRODUCING SAME AND USE OF SAID COMPONENT
PIÈCE POURVUE D'UNE SURFACE CATALYTIQUE, PROCÉDÉ DE FABRICATION ET UTILISATION DE LADITE PIÈCE

(30) Priorität: 21.05.2010 DE 102010021553
(43) Veröffentlichungstag der Anmeldung: 27.03.2013
(73) Patentinhaber: Siemens Aktiengesellschaft, 80333 München (DE)
(72) Erfinder: ARNDT, Axel, 10961 Berlin (DE); DOYE, Christian, 13156 Berlin (DE); KRÜGER, Ursus, 14089 Berlin (DE); PYRITZ, Uwe, 13599 Berlin (DE)
(86) Internationale Anmeldenummer: PCT/EP2011/057949
(87) Internationale Veröffentlichungsnummer: WO 2011/144598

(56) Entgegenhaltungen:
- EP-A1- 1 355 048
- DE-A1- 19 915 377
- DE-A1-102005 023 871
- US-A- 4 302 490
- US-A1- 2003 228 414
- US-A1- 2007 210 010
- US-A1- 2008 112 870
- US-A1- 2008 193 354
- US-B1- 6 281 159
- SCHMACHTEL S. ET AL: "New oxygen evolution anodes for metal electrowinning: MnO2 composite electrodes", JOURNAL OF APPLIED ELECTROCHEMISTRY, KLUWER ACADEMIC PUBLISHERS, DO, vol. 39, no. 10, 6 May 2009 (2009-05-06), pages 1835-1848, XP019749441, ISSN: 1572-8838, DOI: 10.1007/S10800-009-9887-1

## Beschreibung

Die Erfindung betrifft ein Bauteil mit einer Katalysator-Oberfläche. Außerdem betrifft die Erfindung ein Verfahren zum Herstellen einer Katalysator-Oberfläche auf einem Bauteil durch Kaltgasspritzen. Zuletzt betrifft die Erfindung eine Verwendung eines solchen Bauteils.

Eine Katalysatoroberfläche auf einem Bauteil ist beispielsweise gemäß der US 2003/0228414 A1 bekannt. Diese Katalysator-Oberfläche kann durch ein direktes Abscheiden einer katalytisch wirksamen Substanz auf dem Bauteil erzeugt werden. Hierzu wird ein Kaltgasspritzen verwendet, bei dem die Partikel des katalytischen Schichtwerkstoffes in einen sogenannten Kaltgasstrahl, einem mit Überschallgeschwindigkeit strömenden Prozessgas, eingespeist werden. In dem Kaltgasstrahl werden diese Partikel zur Oberfläche des zu beschichtenden Bauteils hin beschleunigt und bleiben unter Umwandlung ihrer kinetischen Energie auf dieser Oberfläche haften.

Gemäß der US 2008/0112870 A1 ist beschrieben, dass eine katalytische Schicht aus Manganoxid und Zeroxid gebildet werden kann, indem diese Bestandteile als Dispersion auf ein Substrat aufgetragen werden. Durch eine Wärmebehandlung wird auf diesem Wege eine Schicht auf dem Substrat erzeugt. Gemäß der US 4,302,490 ist offenbart, dass Schichten mit Manganoxid und Zeroxid auch Verwendung finden können, um den Gehalt an Ozon in der Luft zu verringern. Solche Filter können beispielsweise in der Luftfahrt zum Einsatz kommen. Das Substrat für einen solchen Filter kann Metall, Glas, Keramik oder Plastik sein.

Gemäß Schmachtel et al. "New oxygen evolution anodes for metal electrowinning: MnO2 composite electrodes" in J. Appl. Electrochem. (2009) 39, Seiten 1835 - 1848 wird beschrieben, dass Bleielektroden mit Partikeln aus Manganoxid partiell beschichtet werden können, indem die Manganoxidpartikel durch Kaltgasspritzen auf die Oberfläche des Bleisubstrats aufgebracht werden. Die so entstehenden Manganoxid-Blei-Komposite sollen Bauteile aus einer Blei-Silber-Legierung ersetzen, da deren Herstellung kostengünstiger ist. Die entstandenen Oberflächen sind katalytisch wirksam.

Die Aufgabe der Erfindung liegt darin, ein Bauteil mit einer Katalysator-Oberfläche, ein Verfahren zu dessen Herstellung bzw. eine Verwendung dieses Bauteils anzugeben, wobei die Katalysator-Oberfläche eine vergleichsweise hohe katalytische Aktivität aufweisen soll.

Diese Erfindung wird mit dem eingangs genannten Bauteil bzw. mit einem Kaltpritzverfahren dadurch gelöst, dass die Katalysator-Oberfläche Bereiche aus CeO₂ und erstere Bereiche berührende Bereiche des MnO₂ in Form von Oxidpartikeln aufweist, wobei die Oxidpartikel nur Bereiche der Katalysator-Oberfläche abdecken und außerdem metallische Bereiche aus Ag oder Ni oder Co oder Cu oder Sn oder Zn oder Legierungen mindestens eines dieser Metalle der Katalysator-Oberfläche zur Verfügung gestellt werden, die jeweils an die Bereiche des MnO₂ angrenzen. Die Bereiche des MnO₂ und CeO₂ stellen eine keramische Katalysatoroberfläche dar und werden in diesem Zusammenhang im Folgenden auch als keramische Bereiche bezeichnet.

Um die erfindungsgemäße Schicht herzustellen, ist vorzusehen, dass bei dem Kaltgasspritzen die Katalysatoroberfläche durch Spritzen von Oxidpartikeln, aufweisend ein Gemisch aus MnO₂-Partikeln und CeO₂-Partikeln oder Partikel aus MnO₂ und CeO₂, erzeugt wird, wobei das MnO₂ nur Bereiche der Katalysator-Oberfläche bildet und außerdem metallische Bereiche der Katalysator-Oberfläche zur Verfügung gestellt werden, die jeweils an die Bereiche des MnO₂ angrenzen. Die metallischen Bereiche können, wie nachfolgend noch näher erläutert wird, durch die zu beschichtende metallische Oberfläche des Bauteils oder durch Zumischung metallischer Partikel in den Kaltgasstrahl zur Verfügung gestellt werden. Sollen die oben angegebenen Legierungen erzeugt werden, so kann dies entweder durch Verwendung von Pulvern aus der gewünschten Legierung geschehen, oder es werden Partikel unterschiedlicher Zusammensetzung miteinander gemischt, um zu der gewünschten Legierungszusammensetzung zu kommen, beispielsweise Partikel aus reinem Co, Sn, Zn, Cu, Ag oder Ni. Letzteres Verfahren wird auch als mechanisches Legieren bezeichnet.

Durch die Verwendung von MnO₂ als Paarung mit CeO₂ und mit metallischen Bereichen lässt sich erfindungsgemäß eine besonders hohe katalytische Aktivität der gebildeten Katalysator-Oberfläche erreichen. Es hat sich überraschenderweise gezeigt, dass sich die katalytische Aktivität von MnO₂, die an sich bekannt ist, durch Bereiche aus CeO₂ an der Oberfläche erhöhen lässt, obwohl insgesamt die zur Verfügung stehende katalytische Oberfläche des MnO₂ verringert wird. Dies widerspricht dem an sich zu erwartenden Ergebnis, dass mit einer Verringerung der real zur Verfügung stehenden Oberfläche an MnO₂ bei nicht vollständiger Bedeckung der Oberfläche des Bauteils ein hierzu proportionaler Verlust an Katalysatoraktivität einhergehen sollte.

Die Verbesserung der katalytischen Wirkung lässt sich dadurch erklären, dass das CeO₂ fähig ist, Sauerstoff einfach abzugeben und aufzunehmen. Dies lässt sich stark vereinfacht mit folgender Reaktionsgleichung ausdrücken.

CeO₂ <-> CeO₂₋ₓ + x/2 O₂

Diese Eigenschaft ist insbesondere bei der Ozonzersetzung in Sauerstoff von besonderem Vorteil, da die Sauerstoffbindungen des Ozons aufgespalten werden müssen. Hierbei entsteht O₂ und atomarer Sauerstoff, wobei durch die Eigenschaft, dass CeO₂ atomaren Sauerstoff aufnehmen kann, die benötigte Energie zur Bindungsspaltung des Ozons herabgesetzt wird. Im Zusammenwirken mit MnO₂ wird damit ein beschleunigter Abbau von Ozon bewirkt.

Gemäß einer vorteilhaften Ausgestaltung der Erfindung ist vorgesehen, dass das MnO₂ zumindest teilweise in der γ-Modifikation vorliegt. Die γ-Modifikation ist ein Gefügeaufbau des durch das MnO₂ gebildeten Kristalls, welcher vorteilhaft eine besonders starke katalytische Wirkung zeigt. Allerdings liegt das reale Gefüge des MnO₂ im Allgemeinen nicht ausschließlich in der γ-Modifikation, sondern teilweise auch in anderen Modifikationen vor (z. B. der β-Modifikation des MnO₂). Allerdings sollte nach einer besonderen Ausgestaltung der Erfindung der Gefügeanteil des MnO₂ in der γ-Modifikation bei über 50 Gew.-% liegen.

Gemäß einer Ausgestaltung der Erfindung ist vorgesehen, dass das Bauteil eine Beschichtung aufweist, welche die Bereiche aus CeO₂ und die Bereiche aus MnO₂ der Katalysator-Oberfläche zur Verfügung stellt. Eine solche Beschichtung lässt sich vorteilhaft mit vergleichsweise geringem Materialaufwand auf unterschiedlichen Oberflächen herstellen, so dass das Bauteil aus einem Material hergestellt werden kann, welches beispielsweise im Hinblick auf dessen Verwendungszweck ausgewählt werden kann. Als Beschichtungsverfahren eignet sich vorteilhaft beispielsweise das Kaltgasspritzen (hierzu im Folgenden mehr). Auch kann beispielsweise ein PVD-Verfahren angewendet werden.

Gemäß einer anderen Ausgestaltung der Erfindung ist vorgesehen, dass das Bauteil aus einem einen metallischen Bereich zur Verfügung stellenden Metall besteht und eine nur teilweise deckende keramische Schicht aus MnO₂ und CeO₂ auf dieses Bauteil aufgebracht ist. Hierbei handelt es sich beispielsweise um Bauteile aus Cu, Sn oder Zn, die aufgrund ihrer Materialzusammensetzung den einen für die Herstellung der katalytischen Oberfläche erforderlichen Bestandteil bereits zur Verfügung stellen. Auf diesen Bauteilen ist eine Herstellung der erfindungsgemäßen Oberfläche vorteilhaft besonders einfach möglich, indem eine nicht deckende Schicht, die anderen Bereiche der Oberfläche (nämlich MnO₂ und CeO₂) zur Verfügung stellt, aufgebracht wird.

Gemäß einer anderen Ausgestaltung der Erfindung ist vorgesehen, dass das Bauteil eine Beschichtung aufweist, welche metallische, katalytisch wirksame Bereiche und die Bereiche des MnO₂ und des CeO₂ der Oberfläche zur Verfügung stellt. Bei dieser Variante können Bauteile verschiedener Materialien beschichtet werden, wobei die erfindungsgemäßen katalytischen Eigenschaften der Schicht vorteilhaft alleine durch die Beschaffenheit der Schicht bzw. der durch diese gebildeten katalytischen Oberfläche hervorgerufen wird. Hierbei muss jeweils für den betreffenden Werkstoff des Bauteils ein geeignetes Beschichtungsverfahren ausgewählt werden.

Gemäß einer weiteren Ausgestaltung der Erfindung kann vorgesehen werden, dass die Beschichtung aus einer einen zusätzlichen metallischen Bereich für die Katalysator-Oberfläche zur Verfügung stellenden metallischen Matrix, insbesondere aus Ag oder Ni oder Co oder Cu oder Sn oder Zn oder Legierungen mindestens eines dieser Metalle, besteht, in die Partikel aus MnO₂ und CeO₂ eingebettet sind. Als Legierungen dieser Metalle sind alle Legierungen zu verstehen, die Ag und/oder Ni und/oder Co und/oder Cu und/oder Sn und/oder Zn als Legierungsbestandteile enthalten, wobei die Gesamtanteile dieser Metalle (unabhängig davon, ob eines oder mehrere dieser Metalle in der Legierung enthalten sind) bei über 50 Gew-% liegt. Weitere Legierungsbestandteile wie zum Beispiel andere Metalle können somit mit einem Anteil von unter 50 Gew-% vertreten sein.

Um die erforderliche Berührung zwischen MnO₂ und CeO₂ zu gewährleisten, können die Partikel entweder in einer Dichte in die Matrix eingebettet werden, bei der aufgrund der statistischen Verteilung eine Berührung wahrscheinlich ist. Eine andere Möglichkeit besteht darin, dass Partikel verwendet werden, deren Oberfläche sowohl aus MnO₂ als auch aus CeO₂ bestehen. Derartige Partikel können beispielsweise im Wesentlichen aus MnO₂ gebildet werden, wobei CeO₂ mittels eines PVD-Verfahrens (physical vapour deposition) auf den Partikeln aus MnO₂ abgeschieden wird. Der Aufbau der Katalysatoroberfläche aus einem Metall mit keramischen Partikeln hat den Vorteil, dass sich die schwer verformbaren keramischen Partikel beispielsweise durch Kaltgasspritzen einfach in eine sich aus metallischen Partikeln aufbauende Matrix einbauen lassen. Bei der richtigen Wahl des Metalls wird überdies die katalytische Wirkung der Katalysator-Oberfläche günstig beeinflusst.

Damit lassen sich vorteilhaft Bauteile mit vergleichsweise effizienten Katalysator-Oberflächen herstellen, indem zumindest Bereiche der Katalysator-Oberfläche statt allein mit MnO₂ und CeO₂ zusätzlich auch mit einem Metall belegt werden. Die Oberfläche des Bauteils darf also nicht vollständig mit den katalytisch wirksamen metallischen Bereichen oder den Bereichen des MnO₂ und CeO₂ bedeckt sein. Es genügt bereits eine partielle Beschichtung, um die katalytische Wirkung zu erzielen. Diese ist in Abhängigkeit vom Anwendungsfall so groß zu wählen, dass die zur Verfügung stehende katalytische Oberfläche für den gewünschten Effekt zur Umwandlung beispielsweise von Ozon ausreicht. Der Bereich des MnO₂ im Verhältnis zu der durch beide Bereiche gebildeten Gesamtfläche soll mindestens 10 %, bevorzugt 30 bis 70 %, insbesondere 50 % betragen.

Vorteilhaft kann auch vorgesehen werden, dass das Bauteil oder eine auf dieses aufgebrachte Schicht aus einem von CeO₂ und von MnO₂ verschiedenen Material besteht (welches nicht metallisch ist) und in diesem und/oder auf diesem Partikel vorhanden sind, welche jeweils die Bereiche aus CeO₂ und die Bereiche aus MnO₂ an ihrer Oberfläche zur Verfügung stellen. Hierbei können vorteilhaft beliebige Materialien ausgewählt werden, wobei Voraussetzung ist, dass diese sich mit CeO₂ und/oder MnO₂ beschichten lassen bzw. sich dieses keramische Material in diese Materialien einbauen lässt. Beispielsweise können Kunststoffbauteile auf diesem Wege mit katalytischen Oberflächen versehen werden. Hierbei ist, wie bereits erwähnt, CeO₂ und MnO₂ mit einem direkten Kontakt zueinander zu verwenden, damit die erfindungsgemäße Optimierung der katalytischen Wirkung genutzt werden kann.

Besonders vorteilhaft kann das Bauteil eine gitterförmige Struktur aufweisen. Dies kann ein Gitter mit einer zweidimensionalen Ausrichtung sein, also ein im Wesentlichen flach ausgebildetes Bauteil. Es ist aber auch möglich, dreidimensionale Gitterstrukturen auszubilden, die sich beispielsweise mittels Rapid Prototyping Technologien herstellen lassen. Die gitterförmigen Strukturen bieten den wesentlichen Vorteil, dass einerseits die für die Aufbringung der katalytischen Wirkpartner zur Verfügung stehenden Oberfläche vergrößert wird, andererseits allerdings der durch die Gitterstruktur erzeugte Strömungswiderstand vergleichsweise gering ausfällt. Gitterförmige Bauteile können daher vorteilhaft in Lüftungskanälen angewendet werden. Besonders vorteilhaft ist die Anwendung beispielsweise bei Dunstabzugshauben, wobei die gitterförmige Struktur deren Auslassgitter für gereinigte Abluft bildet. Diese Anwendung wird bei sogenannten Umlufthauben verwendet, bei denen im Gegensatz zu Ablufthauben die angesaugte Luft nicht aus dem Gebäude abgeführt wird, sondern in diesem verbleibt.

Um bei Dunstabzugshauben nach dem Umluftprinzip nicht nur eine Reinigung der Luft von Feststoffen, Aerosolen und Kleinstpartikeln zu erreichen, wie diese beispielsweise im Kochdunst enthalten sind, sondern auch eine Reinigung von Gerüchen zu erreichen, werden nach dem Stand der Technik Plasmageneratoren verwendet, die eine Hochspannungs-Entladungsquelle aufweisen, mit der die Luft mit atomarem Sauerstoff angereichert wird. Dieser bewirkt einen Zersetzungs- bzw. Oxidationsprozess, der die für die Geruchsentstehung verantwortlichen Kohlenstoffverbindungen aufspaltet und die Gerüche auf diese Weise eliminiert. Bei diesem Prozess entsteht jedoch auch Ozon, welches durch die erfindungsgemäßen Bauteile auf katalytischem Wege in zweiatomigen Sauerstoff umgewandelt werden kann. Hierdurch können vorteilhaft Aktivkohlefilter eingespart werden, welche der Luftströmung der Dunstabzugshaube nachteilhaft einen vergleichsweise hohen Luftwiderstand entgegensetzen und außerdem in regelmäßigen Abständen ausgetauscht werden müssen.

Als Verfahren zur Herstellung der Schicht auf dem Bauteil kann beispielsweise ein Kaltgasspritzen verwendet werden, wobei die katalytische Oberfläche durch Spritzen von Oxidpartikeln, aufweisend ein Gemisch aus MnO₂-Partikeln und CeO₂-Partikeln oder aufweisend Partikel aus MnO₂ und CeO₂, erzeugt wird. Dabei bilden das MnO₂ und das CeO₂ jeweils nur Bereiche der katalytischen Oberfläche. Vorzugsweise werden zusätzlich katalytisch wirksame metallische Bereiche aus Ag oder Ni oder Co oder Cu oder Sn oder Zn oder Legierungen mindestens eines dieser Metalle gebildet. Die metallischen Bereiche können, wie bereits beschrieben, entweder durch das Bauteil selbst zur Verfügung gestellt werden, oder sie werden als Partikel dem Kaltgasstrahl zugegeben, so dass die metallischen Bereiche der Oberfläche durch die sich ausbildende Schicht mitgebildet werden. Hierdurch lässt sich die katalytische Oberfläche vorteilhaft noch besser an den entsprechenden Anwendungsfall anpassen

Insbesondere können auch MnO₂-Partikel verwendet werden, die zumindest teilweise die γ-Modifikation des MnO₂-Gefüges aufweisen. Dabei muss das Kaltgasspritzen mit Betriebstemperaturen auf jeden Fall unterhalb der Zersetzungstemperatur der γ-Modifikation betrieben werden. Diese Temperatur liegt bei 535°C. Prozesstechnisch kann bei der Wahl der Temperatur des Kaltgasstrahls ein gewisser Sicherheitsabstand zu dieser Zersetzungstemperatur eingehalten werden. Dagegen hat es sich gezeigt, dass ein kurzzeitiges Überschreiten dieser Temperatur beim Auftreffen der MnO₂-Partikel auf die Oberfläche gefügetechnisch keine Auswirkungen hat, weil diese Temperaturerhöhung extrem lokal nur im Oberflächenbereich der verarbeiteten MnO₂-Partikel auftritt. Der jeweilige Kern der Partikel, der in einem unkritischen Temperaturbereich bleibt, vermag die γ-Modifikation des Partikelgefüges anscheinend genügend zu stabilisieren, so dass die γ-Modifikation des MnO₂-Gefüges auch auf der katalytisch wirksamen Oberfläche der Partikel erhalten bleibt.

Außerdem führt eine Erwärmung des MnO₂ über 450°C an sich zu einer Umwandlung des MnO₂ in Mn₂O₃. Dieser Prozess schreitet jedoch nur langsam voran, so dass eine kurzfristige Überschreitung der Temperatur, wie sie beim Kaltgasspritzen auftritt, unschädlich ist.

Um die hervorragenden katalytischen Eigenschaften des MnO₂ zu erhalten, muss die γ-Modifikation des Gefüges zumindest teilweise in den MnO₂-Partikeln enthalten sein. Dies kann durch ein Gemisch der MnO₂-Partikel mit Manganoxidpartikeln anderer Modifikationen (z. B. β-Modifikation des MnO₂) verwirklicht sein. Eine andere Möglichkeit besteht darin, dass die Partikel aus Phasengemischen bestehen, so dass die γ-Modifikation des MnO₂ nicht als einzige in den Partikeln vorliegt.

Weiterhin ist es von Vorteil, wenn als Oxidpartikel (also Partikel aus MnO₂ und CeO₂ oder Partikelgemische aus MnO₂-Partikeln und CeO₂-Partikeln) Nanopartikel mit einem Durchmesser > 100 nm verarbeitet werden. Unter Nanopartikel im Sinne dieser Erfindung sind Partikel zu verstehen, die < 1 µm im Durchmesser sind. Es hat sich nämlich überraschenderweise gezeigt, dass sich derart kleine Oxidpartikel aus MnO₂ mit einem hohen Abscheidewirkungsgrad auf der katalytischen Oberfläche abscheiden lassen. Normalerweise wird demgegenüber davon ausgegangen, dass sich Partikel von weniger als 5 µm durch Kaltgasspritzen nicht abscheiden lassen, da aufgrund der geringen Masse dieser Partikel die durch den Kaltgasstrahl eingeprägte kinetische Energie zur Abscheidung nicht ausreicht. Warum dies speziell für MnO₂-Partikel bzw. CeO₂-Partikel nicht gilt, kann nicht genau begründet werden. Anscheinend sind neben dem Effekt der kinetischen Deformation auch andere Haftungsmechanismen bei dem Schichtbildungsprozess im Spiel.

Die Verarbeitung von Nanopartikeln des MnO₂ hat den Vorteil, dass mit vergleichsweise wenig Material eine vergleichsweise hohe spezifische Oberfläche und damit eine starke Ausprägung der katalytischen Wirkung erreicht werden kann. Auch die Grenzlinien zwischen den Bereichen des MnO₂, des CeO₂ und evtl. metallischen Bereichen der katalytischen Oberfläche werden auf diese Weise vorteilhaft stark verlängert, was sich ebenfalls auf eine hohe Ausprägung der katalytischen Eigenschaften auswirkt.

Von Vorteil ist es, wenn ein Gemisch aus MnO₂-Partikeln und metallischen Partikeln aus Ag oder Ni oder Co oder Cu oder Sn oder Zn oder Legierungen mindestens eines dieser Metalle für die metallischen Bereiche der katalytischen Oberfläche verwendet wird. Insbesondere kann dann durch geeignete Wahl von Temperatur und Partikelgeschwindigkeit im Kaltgasstrahl der Energieeintrag in die Partikel so gesteuert werden, dass die die katalytische Oberfläche bildende spezifische (oder innere) Oberfläche der hergestellten Schicht gesteuert wird. Durch eine höhere Porösität der hergestellten Schicht lässt sich nämlich die innere Oberfläche vergrößern, um eine vergrößerte katalytische Oberfläche zur Verfügung zu stellen. Hierdurch kann die katalytische Wirkung also vergrößert werden. Demgegenüber kann es aber auch von Vorteil sein, wenn die Oberfläche möglichst glatt ausgebildet ist, um einer Verschmutzungsneigung entgegenzuwirken.

Neben der Abscheidung durch Kaltgasspritzen sind selbstverständlich auch andere Herstellungsverfahren denkbar. Beispielsweise kann die katalytische Oberfläche elektrochemisch hergestellt werden, wenn ein zusätzlicher metallischer Bereich der katalytischen Oberfläche vorgesehen ist. Dabei wird der metallische Bereich der katalytischen Oberfläche als Schicht elektrochemisch aus einem Elektrolyt abgeschieden, in dem die Oxidpartikel (MnO₂ und CeO₂) suspendiert sind. Diese werden während des elektrochemischen Abscheideprozesses dann in die sich ausbildende Schicht eingebaut und bilden damit auch die Bereiche des MnO₂ und des CeO₂ an der Oberfläche der Schicht.

Ein weiteres Verfahren kann dadurch erhalten werden, dass die Schicht aus einer MnO₂ und CeO₂ zumindest enthaltenden Keramik hergestellt wird. Zu diesem Zweck kann eine Mischung aus präkeramischen Polymeren, die Vorstufen der gewünschten Keramik bilden, und optional auch Metallpartikeln in einer Lösung auf das zu beschichtende Bauteil aufgetragen werden. Zunächst wird das Lösungsmittel verdampft, anschließend kann durch eine Wärmebehandlung, die vorteilhaft unterhalb der Zersetzungstemperatur der γ-Modifikation des MnO₂ (535°C) liegt, zur Keramik umgewandelt werden. Besser noch bleibt die Temperatur unter 450°C, um die Bildung von Mn₂O₃ zu verhindern.

Mit den genannten Verfahren lassen sich u. a. auch die folgenden Ausgestaltungen des erfindungsgemäßen Bauteils erzeugen. So kann die hergestellte Beschichtung eine metallische Lage aufweisen, auf der eine nur teilweise deckende Lage aus MnO₂ und CeO₂ aufgebracht ist. Die metallische Lage bildet damit den zusätzlichen metallischen Bereich der Oberfläche, die an den Stellen, wo die Schicht aus MnO₂ nicht deckt, zum Vorschein kommt. Bei dieser Bauteilgestaltung ist vorteilhaft nur ein vergleichsweise geringer Bereich aus MnO₂ und CeO₂ notwendig. Es ist hierbei auch denkbar, die oben aufgeführten Fertigungsverfahren in Kombination anzuwenden. Beispielsweise lässt sich die metallische Lage galvanisch herstellen und die nur teilweise deckende Lage aus MnO₂ und CeO₂ durch Kaltgasspritzen.

Eine andere Möglichkeit besteht darin, dass die Beschichtung eine die Bereiche aus MnO₂ und CeO₂ zur Verfügung stellende keramische Lage aufweist, auf der eine nur teilweise deckende metallische Lage aufgebracht ist. Diese Gestaltung des Bauteils ist von Bedeutung, wenn die Eigenschaften der keramischen Schicht konstruktiv bedingt für das Bauteil von Vorteil sind (beispielsweise Korrosionsschutz).

Auch ist es möglich, dass die Beschichtung aus einer die Bereiche aus MnO₂ und CeO₂ zur Verfügung stellenden Keramik besteht, in die metallische Partikel als zusätzlicher metallischer Bereich eingebettet sind. Dies ist insbesondere dann von Vorteil, wenn die keramische Schicht verschleißbeansprucht ist und bei fortschreitendem Verschleiß, d. h. Abtrag der Schicht, ihre katalytischen Eigenschaften beibehalten soll. Letzteres wird dadurch gewährleistet, dass beim Abtrag der Keramikschicht immer wieder metallische Partikel freigelegt werden. Natürlich ist es auch denkbar, dass die Schicht eine metallische Matrix aufweist, in die die Oxidpartikel eingebettet sind. Auch für diese Schicht gilt das Argument, dass bei einem Schichtabtrag die katalytischen Eigenschaften derselben erhalten bleiben.

Das Bauteil kann auch so ausgeführt sein, dass dieses oder eine auf dieses aufgebrachte Schicht aus einer vom MnO₂ und CeO₂ verschiedenen (bevorzugt auch von dem weiteren metallischen Bereich verschiedenen) Material besteht und in diesem (bei Verschleißbeanspruchung, s. oben) und/oder auf diesem Partikel vorhanden sind, welche jeweils die Bereiche des MnO₂ und des CeO₂ (optional auch die metallischen Bereiche mit katalytischen Eigenschaften) an ihrer Oberfläche (gemeint ist die Oberfläche der Partikel) zur Verfügung stellen. Hierbei handelt es sich vorteilhaft um maßgeschneiderte Partikel mit katalytischen Eigenschaften, welche universell auf jede Oberfläche oder in jede Matrix eingebracht werden können. Hierbei muss jeweils das zur Einbringung bzw. Aufbringung geeignete Verfahren gewählt werden. Mit dieser Maßnahme lassen sich beispielsweise auch Bauteile aus Kunststoff mit katalytischen Eigenschaften herstellen. Die in die Schicht oder das Bauteil eingebrachten Partikel werden entweder bei einer Verschleißbeanspruchung freigelegt bzw. können bei einer porösen Struktur des Bauteils auch an der katalytischen Wirkung beteiligt sein, wenn diese die Wände der Poren bilden.

Zuletzt betrifft die Erfindung eine Verwendung des bereits beschriebenen Bauteils zur Verringerung des Ozon-Gehaltes eines die Katalysator-Oberfläche überstreichenden Gases. Dieses Gas kann vorrangig durch die Erdatmosphäre zur Verfügung gestellt werden. Unter bestimmten Bedingungen ist die Luft mit Ozon angereichert, z.B. an heißen Sommertagen im Innenstadtbereich oder auch in höheren Atmosphärenschichten, die durch den Flugverkehr genutzt werden. Da Ozon gesundheitsschädlich auf den menschlichen Organismus wirkt, kann die Atemluft, die aus der Atmosphäre in den Innenraum von KFZ oder auch in die Fahrgastkabine eines Flugzeugs gepumpt wird, mittels der erfindungsgemäßen Katalysator-Oberfläche weitgehend von Ozon befreit werden. Außerdem ist der Ozongehalt beispielsweise im Abluftbereich von Dunstabzugshauben mit sogenannten Plasma-Reinigungseinheiten für die Abluft erhöht.

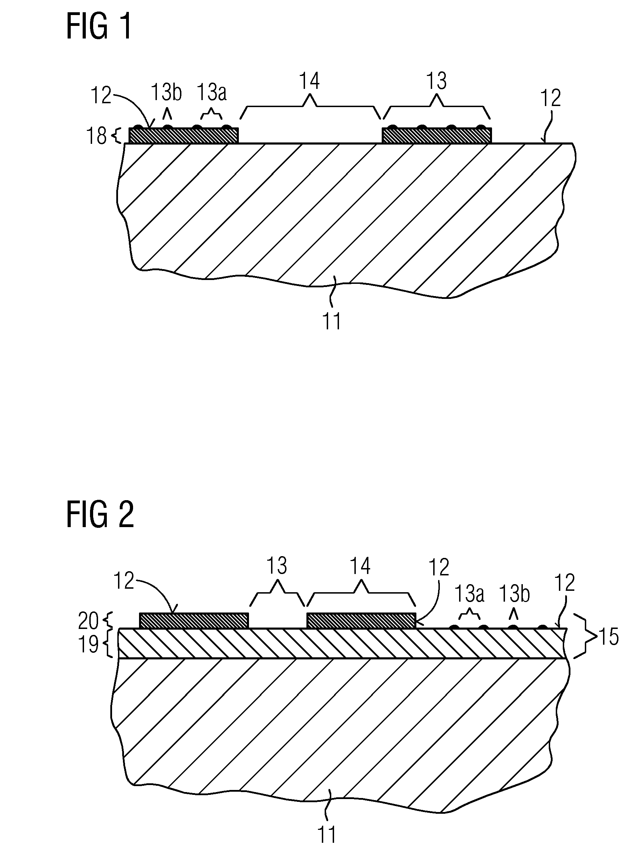

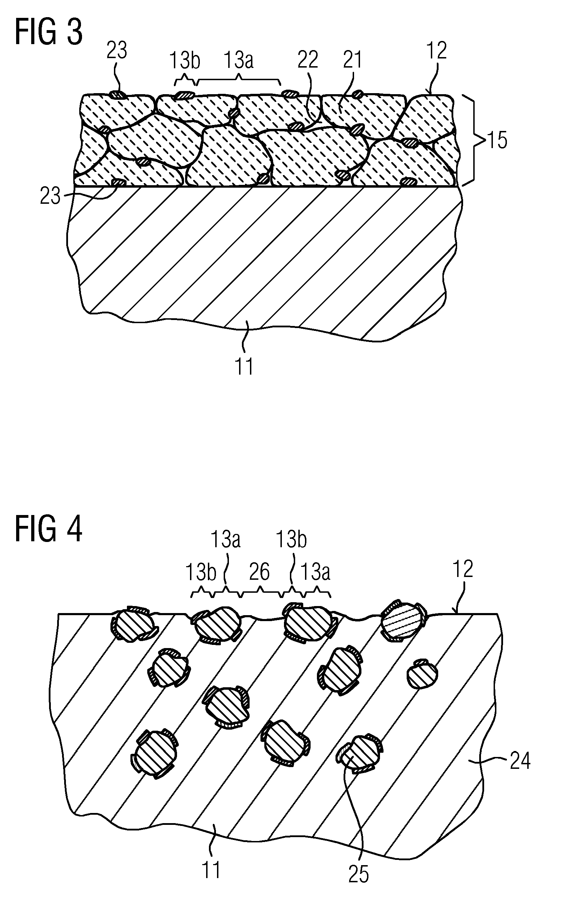

Selbstverständlich sind auch Anwendungen in der chemischen Verfahrenstechnik denkbar.
Die Katalysatoroberfläche kann beispielsweise als Innenauskleidung von Luft führenden Leitungssystemen ausgestaltet werden. Dies hat den Vorteil, dass durch Vorsehen der Katalysator-Oberfläche kein zusätzliches Strömungshindernis in die Luft führenden Kanäle eingebaut werden muss. Um die zur Verfügung stehende Katalysator-Oberfläche zu vergrößern, kann das Luftführungssystem auch mit einem luftdurchlässigen Einsatz versehen werden, welcher durch die angesaugte Luft umströmt werden muss.
Weitere Einzelheiten der Erfindung werden nachfolgend anhand der Zeichnung beschrieben. Gleiche oder sich entsprechende Zeichnungselemente sind in den einzelnen Figuren mit den gleichen Bezugszeichen versehen und werden nur insoweit mehrfach erläutert, wie sich Unterschiede zwischen den einzelnen Figuren ergeben. Es zeigen
die Figuren 1 und 2 unterschiedliche Ausführungsbeispiele des erfindungsgemäßen Bauteils mit verschiedenen katalytischen Oberflächen, und die Figuren 3 und 4 zeigen nicht erfindungsgemäße Alternativbeispiele.

Die Figuren 1 bis 4 zeigen jeweils ein Bauteil 11 mit einer Oberfläche 12, die katalytische Eigenschaften aufweist (auch Katalysator-Oberfläche genannt). Diese Eigenschaften werden dadurch erzeugt, dass die Oberfläche jeweils einen Bereich 13a hat, der aus MnO₂ besteht und weiterhin ein Bereich 13b aus CoO₂ zur Verfügung gestellt wird (zusammen als Bereich 13 bezeichnet). Das Bauteil könnte beispielsweise ein Luftführungskanal sein, dessen Innenwände die besagte Oberfläche bilden.

Der Aufbau der Bauteile 11, der jeweils im Schnitt dargestellt ist, weist jedoch Unterschiede auf. Das Bauteil gemäß Figur 1 besteht selbst aus einem katalytisch wirkenden Metall, wie z.B. Ni, so dass dessen Oberfläche 12 automatisch einen metallischen Bereich 14 zur Verfügung stellt. Auf der Oberfläche 12 sind weiterhin inselartige Bereiche aus MnO₂ gebildet, die den Bereich 13a zur Verfügung stellen. Die inselartigen Bereiche tragen wiederum nicht deckende Bereiche 13b aus CeO₂, so dass sich zwischen diesen Bereichen gemeinsame Grenzlinien in der katalytischen Oberfläche 12 ergeben. Diese Bereiche 13a, 13b können beispielsweise als nicht deckende Beschichtung durch Kaltgasspritzen aufgebracht werden.

Gemäß Figur 2 ist ein Bauteil 11 dargestellt, welches aus einem zur Erzeugung der katalytischen Eigenschaften der Oberfläche ungeeigneten Material besteht. Daher wird auf dieses Bauteil 11 eine katalytisch wirksame Schicht 15 aufgebracht. Die Schicht 15 besteht aus zwei Lagen 19, 20. Die Lage 19 ist aus MnO₂ gebildet. Diese Lage stellt, wie aus Figur 2 deutlich wird, Anteile der katalytischen Oberfläche 12 zur Verfügung, die die Bereiche des MnO₂ der katalytischen Oberfläche bilden. Auf der Lage 19 ist weiterhin eine nicht deckende Lage 20 aus einem Metall aufgebracht, welches selbst eine katalytische Wirkung aufweist, die in den betreffenden metallischen Bereichen zur Verfügung gestellt wird. Diese metallischen Bereiche 14 grenzen direkt an die katalytischen Bereiche 13 an, die durch die Bereiche des MnO₂ 13a und Bereiche des CeO₂ 13b gebildet sind. Die Bereiche des CeO₂ sind inselartig auf der Lage 19 aus MnO₂ gebildet, so dass zwischen diesen genannten Bereichen gemeinsame Grenzlinien in der Katalysator-Oberfläche 12 entstehen.

In Figur 3 wird die Beschichtung 15 durch eine keramische Matrix 21 aus MnO₂ gebildet, wobei diese Poren 22 aufweist, welche die innere Oberfläche im Vergleich zur äußeren Oberfläche 12 des Bauteils vergrößern und so auch einen katalytischen Effekt verstärken. In der keramischen Matrix 21 sind Partikel 23 aus CeO₂ vorgesehen, die sowohl an der Oberfläche 12 den Bereich 13b (CeO₂) zur Verfügung stellen, als auch in den Poren katalytisch wirksam werden können. Die keramische Matrix 21 stellt den Bereich 13a (MnO₂) zur Verfügung. Wie auch bei Figur 2 kann das Bauteil 11 gemäß Figur 3 aus einem beliebigen Material bestehen, wobei nur die Haftung der Beschichtung 15 auf dem Bauteil 11 sichergestellt werden muss.

Das Bauteil 11 gemäß Figur 4 weist eine Matrix aus einem beliebigen Material 24, z.B. Kunststoff auf. In dieses sind Partikel 25 eingebracht, deren jeweilige Oberfläche sowohl metallische die Bereiche 13b aus CeO₂ wie auch die Bereiche 13a aus MnO₂ aufweisen. Bei dem Ausführungsbeispiel gemäß Figur 4 bestehen die Partikel selbst aus MnO₂ und Bereiche 13b aus CeO₂ sind auf der Oberfläche der Partikel ausgebildet. Denkbar ist selbstverständlich auch der umgekehrte Fall. Die Partikel liegen an der Oberfläche 12 des Bauteils 11 teilweise frei, wodurch die Bereiche 13b und die Bereiche 13a gebildet werden. Weiterhin gibt es Bereiche 26 der Oberfläche 12 aus Kunststoff, welche nicht katalytisch wirksam sind. Das Verhältnis der genannten Bereiche kann direkt durch den Füllgrad von Partikeln 25 in dem Material 24 beeinflusst werden.

Nicht dargestellt in den Figuren, kann besonders vorteilhaft auch ein Pulver aus Partikeln zur Verfügung gestellt werden, welche metallisch sind. Diese können mit Bereichen 13a, 13b aus MnO₂ und CeO₂ beschichtet sein, wobei sich diese Bereiche unter Ausbildung gemeinsamer Grenzlinien berühren. Auf diese Weise erhält man ein Pulver, welches die erfindungsgemäßen katalytischen Eigenschaften besitzt und beispielsweise durch Kaltgasspritzen verarbeitet werden kann. Beispielsweise ließe sich eine Kunststoffoberfläche beschichten, so dass sich ein Aufbau der katalytischen Oberfläche entsprechend der Oberfläche in Figur 4 ergeben würde. Auch kann mit den Partikeln selbst ein Schichtaufbau durch Kaltgasspritzen erfolgen, wobei sich ein Schichtaufbau gemäß Figur 3 ergeben würde, mit dem Unterschied, dass die Matrix 21 selbst metallisch wäre und die Beschichtung der Partikel sowohl den Bereich 13a, als auch den Bereich 13b zur Verfügung stellen würde. Bei Wahl eines geeigneten Metalls für die Partikel kann auch dieses an den ablaufenden katalytischen Reaktionen beteiligt sein.

## Patentansprüche

1. Bauteil mit einer Katalysator-Oberfläche (12)
**dadurch gekennzeichnet,**
**dass** die Katalysator-Oberfläche (12) Bereiche (13b) aus CeO₂ und diese Bereiche berührende Bereiche (13a) aus MnO₂ in Form von Oxidpartikeln aufweist, wobei die Oxidpartikel nur Bereiche (13) der Katalysator-Oberfläche (12) abdecken und außerdem metallische Bereiche (14) aus Ag oder Ni oder Co oder Cu oder Sn oder Zn oder Legierungen mindestens eines dieser Metalle der Katalysator-Oberfläche zur Verfügung gestellt werden, die jeweils an die Bereiche (13) des MnO₂ angrenzen.

2. Bauteil nach Anspruch 1,
**dadurch gekennzeichnet,**
**dass** das Manganoxid zumindest teilweise in der γ-Modifikation des MnO₂ vorliegt.

3. Bauteil nach Anspruch 2,
**dadurch gekennzeichnet,**
**dass** der in der γ-Modifikation vorliegende Gefügeanteil des Manganoxids bei über 50 Gew.-% liegt.

4. Bauteil nach einem der voranstehenden Ansprüche,
**dadurch gekennzeichnet,**
**dass** dieses eine Beschichtung (15) aufweist, welche die Bereiche (13b) aus CeO₂ und die Bereiche (13a) aus MnO₂ der Katalysator-Oberfläche (12) zur Verfügung stellt.

5. Bauteil nach Anspruch 4,
**dadurch gekennzeichnet,**
**dass** dieses aus einem metallischen Werkstoff, insbesondere aus Ag oder Ni oder Cu oder Co oder Sn oder Zn oder Legierungen mindestens eines dieser Metalle, besteht, wobei die Beschichtung (15) als teilweise deckende keramische Schicht aus CeO₂ und MnO₂ auf dieses Bauteil aufgebracht ist, so dass das Bauteil zusätzlich einen metallischen Bereich (14) für die Katalysator-Oberfläche zur Verfügung stellt.

6. Bauteil nach Anspruch 4,
**dadurch gekennzeichnet,**
**dass** die Beschichtung (15) eine die Bereiche aus MnO₂ (13a) und CeO₂ (13b) zur Verfügung stellende keramische Lage (19) aufweist, auf der eine nur teilweise deckende metallische Lage (20), insbesondere aus Ag oder Ni oder Cu oder Ag oder Ni oder Co oder Cu oder Sn oder Zn oder Legierungen mindestens eines dieser Metalle, aufgebracht ist, die einen zusätzlichen metallischen Bereich (14) für die Katalysator-Oberfläche zur Verfügung stellt.

7. Bauteil nach Anspruch 4,
**dadurch gekennzeichnet,**
**dass** die Beschichtung aus einer einen zusätzlichen metallischen Bereich für die Katalysator-Oberfläche zur Verfügung stellenden metallischen Matrix, insbesondere aus Ag oder Ni oder Co oder Cu oder Sn oder Zn oder Legierungen mindestens eines dieser Metalle, besteht, in die Partikel aus MnO₂ und CeO₂ eingebettet sind.

8. Bauteil nach einem der Ansprüche 5 bis 7,
**dadurch gekennzeichnet,**
**dass** der Oberflächenanteil der Bereiche (13a) aus MnO₂ und der Bereiche (13b) aus CeO₂ im Verhältnis zu der Gesamtfläche der Katalysator-Oberfläche bei mindestens 10 %, bevorzugt zwischen 30 und 60 % und insbesondere bei 50 % liegt.

9. Bauteil nach einem der Ansprüche 1 bis 4,
**dadurch gekennzeichnet,**
**dass** dieses oder eine auf dieses aufgebrachte Schicht aus einer von CeO₂ und von MnO₂ verschiedenen Material (24) besteht und in diesem und/oder auf diesem Partikel (25) vorhanden sind, welche jeweils die Bereiche (13b) aus CeO₂ und die Bereiche (13a) des MnO₂ an ihrer Oberfläche zur Verfügung stellen.

10. Bauteil nach einem der voranstehenden Ansprüche,
**dadurch gekennzeichnet,**
**dass** das Bauteil eine gitterförmige Struktur aufweist.

11. Bauteil nach Anspruch 10,
**dadurch gekennzeichnet,**
**dass** das Bauteil als Lüftungsgitter, insbesondere als Auslassgitter einer Dunstabzugshaube oder eines durchströmbaren Plasmagenerators ausgebildet ist.

12. Verfahren zum Herstellen einer Katalysator-Oberfläche (12) auf einem Bauteil durch Kaltgasspritzen,
**dadurch gekennzeichnet,**
**dass** die Katalysator-Oberfläche (12) durch Spritzen von Oxidpartikeln, aufweisend ein Gemisch aus MnO₂-Partikeln und CeO₂-Partikeln oder Partikel aus CeO₂ und MnO₂, erzeugt wird, wobei die Oxidpartikel nur Bereiche (13) der Katalysator-Oberfläche (12) abdecken und außerdem metallische Bereiche (14) aus Ag oder Ni oder Co oder Cu oder Sn oder Zn oder Legierungen mindestens eines dieser Metalle der Katalysator-Oberfläche zur Verfügung gestellt werden, die jeweils an die Bereiche (13) des MnO₂ angrenzen.

13. Verfahren nach Anspruch 12,
**dadurch gekennzeichnet,**
**dass** MnO₂-Partikel verwendet werden, die zumindest teilweise die γ-Modifikation des MnO₂-Gefüges aufweisen und das Kaltgasspritzen mit Betriebstemperaturen unterhalb der Zersetzungstemperatur von Manganoxid betrieben wird.

14. Verfahren nach einem der Ansprüche 12 bis 13,
**dadurch gekennzeichnet,**
**dass** ein Gemisch aus den Oxidpartikeln und metallischen Partikeln aus Ag oder Ni oder Co oder Cu oder Sn oder Zn oder Legierungen mindestens eines dieser Metalle für die metallischen Bereiche (14) der Katalysator-Oberfläche verwendet wird.

15. Verfahren nach einem der Ansprüche 12 bis 14,
**dadurch gekennzeichnet,**
**dass** die die Katalysator-Oberfläche bildende spezifische Oberfläche der hergestellten Schicht durch den Energieeintrag in den Kaltgasstrahl gesteuert wird.

16. Verwendung eines Bauteils gemäß einem der Ansprüche 1 bis 11 zur Verringerung des Ozon-Gehaltes eines die Katalysator-Oberfläche überstreichenden Gases.

## Claims

1. Component part with a catalyst surface (12),
**characterized in that**
the catalyst surface (12) has regions (13b) of CeO₂ and regions (13a) of MnO₂ in the form of oxide particles in contact with the latter regions, the oxide particles covering only regions (13) of the catalyst surface (12), and metallic regions (14) of Ag or Ni or Co or Cu or Sn or Zn or alloys of at least one of these metals being also provided to the catalyst surface, each of which adjoin the regions (13) of MnO₂.

2. Component part according to Claim 1,
**characterized in that**
the manganese oxide is present at least partly in the γ polymorph of MnO₂.

3. Component part according to Claim 2,
**characterized in that**
the structural proportion of the manganese oxide present in the γ polymorph is more than 50% by weight.

4. Component part according to any of the preceding claims,
**characterized in that**
it has a coating (15) which provides the regions (13b) of CeO₂ and the regions (13a) of MnO₂ on the catalyst surface (12).

5. Component part according to Claim 4,
**characterized in that**
it consists of a metallic material, especially of Ag or Ni or Cu or Co or Sn or Zn or alloys of at least one of these metals, the coating (15) having been applied to this component part as a partly covering ceramic layer of CeO₂ and MnO₂, such that the component part additionally provides a metallic region (14) for the catalyst surface.

6. Component part according to Claim 4,
**characterized in that**
the coating (15) has a ceramic layer (19) which provides the regions of MnO₂ (13a) and CeO₂ (13b), on which an only partly covering metallic layer (20), especially of Ag or Ni or Co or Cu or Sn or Zn or alloys of at least one of these metals, has been applied, and which provides an additional metallic region (14) for the catalyst surface.

7. Component part according to Claim 4,
**characterized in that**
the coating consists of a metallic matrix which provides an additional metallic region for the catalyst surface, especially composed of Ag or Ni or Co or Cu or Sn or Zn or alloys of at least one of these metals, into which particles composed of MnO₂ and CeO₂ are embedded.

8. Component part according to any of Claims 5 to 7,
**characterized in that**
the surface area proportion of the regions (13a) of MnO₂ and the regions (13b) of CeO₂, in relation to the total area of the catalyst surface, is at least 10%, preferably between 30 and 60% and especially 50%.

9. Component part according to any of Claims 1 to 4,
**characterized in that**
it or a layer applied thereto consists of a material (24) other than CeO₂ and MnO₂, and particles (25) present therein and/or thereon each provide the regions (13b) of CeO₂ and the regions (13a) of MnO₂ on the surface thereof.

10. Component part according to any of the preceding claims,
**characterized in that**
the component part has a grid structure.

11. Component part according to Claim 10,
**characterized in that**
the component part is configured as a ventilation grid, especially as an outlet grid of an extractor hood or of a flow-through plasma generator.

12. Process for producing a catalyst surface (12) on a component part by cold gas spraying,
**characterized in that**
the catalyst surface (12) is produced by spraying of oxide particles comprising a mixture of MnO₂ particles and CeO₂ particles or particles composed of CeO₂ and MnO₂, the oxide particles covering only regions (13) of the catalyst surface (12), and metallic regions (14) of Ag or Ni or Co or Cu or Sn or Zn or alloys of at least one of these metals being also provided to the catalyst surface, each of which adjoin the regions (13) of MnO₂.

13. Process according to Claim 12,
**characterized in that**
MnO₂ particles having at least partly the γ polymorph of the MnO₂ structure are used, and the cold gas spraying is conducted with operating temperatures below the decomposition temperature of manganese oxide.

14. Process according to either of Claims 12 and 13,
**characterized in that**
a mixture of the oxide particles and metallic particles of Ag or Ni or Co or Cu or Sn or Zn or alloys of at least one of these metals is used for the metallic regions (14) of the catalyst surface.

15. Process according to any of Claims 12 to 14,
**characterized in that**
the specific surface area which forms the catalyst surface of the layer produced is controlled by the energy input into the cold gas jet.

16. Use of a component part according to any of Claims 1 to 11 for reducing the ozone content of a gas which passes over the catalyst surface.

## Revendications

1. Pièce ayant une surface (12) formant catalyseur,
**caractérisée en ce que**
la surface (12) formant catalyseur a des parties (13b) en CeO₂ et, touchant ces parties, des parties (13a) en MnO₂ sous la forme de particules d'oxyde, les particules d'oxyde recouvrant seulement des parties (13) de la surface (12) formant catalyseur et mettant en outre à disposition des parties (14) métalliques en Ag ou en Ni ou en Co ou en Cu ou en Sn ou en Zn ou en des alliages d'au moins l'un de ces métaux de la surface formant catalyseur, qui sont voisines respectivement des parties (13) du MnO₂.

2. Pièce suivant la revendication 1,
**caractérisée en ce que** l'oxyde de manganèse se présente au moins en partie sous la forme γ du MnO₂.

3. Pièce suivant la revendication 2,
**caractérisée en ce que** la proportion se présentant sous la forme γ de l'oxyde de manganèse est de plus de 50 % en poids.

4. Pièce suivant l'une des revendications précédentes,
**caractérisée en ce qu'**elle a un revêtement (15) qui met à disposition les parties (13b) en CeO₂ et les parties (13a) en MnO₂ de la surface (12) formant catalyseur.

5. Pièce suivant la revendication 4,
**caractérisée en ce que**
elle est en un matériau métallique, notamment en Ag ou en Ni ou en Cu ou en Co ou en Sn ou en Zn ou en des alliages d'au moins l'un de ces métaux, le revêtement (15) étant déposé sur cette pièce sous la forme d'une couche en céramique en CeO₂ et en MnO₂ recouvrant partiellement de sorte que la pièce met supplémentairement à disposition une partie (14) métallique pour la surface formant catalyseur.

6. Pièce suivant la revendication 4,
**caractérisée en ce que**
le revêtement (15) a une couche (19) en céramique mettant à disposition les parties en MnO₂ (13a) et en CeO₂ (13b), couche sur laquelle est déposée une couche (20) métallique, recouvrant seulement partiellement, notamment en Ag ou en Ni ou en Cu ou en Ag ou en Ni ou en Co ou en Cu ou en Sn ou en Zn ou en des alliages d'au moins l'un de ces métaux, qui met à disposition une partie (14) métallique supplémentaire pour la surface formant catalyseur.

7. Pièce suivant la revendication 4,
**caractérisée en ce que** le revêtement est en une matrice métallique mettant à disposition une partie métallique supplémentaire pour la surface formant catalyseur, notamment en Ag ou en Ni ou en Co ou en Cu ou en Sn ou en Zn ou en des alliages d'au moins l'un de ces métaux, dans laquelle sont incorporées des particules en MnO₂ et en CeO₂.

8. Pièce suivant l'une des revendications 5 à 7,
**caractérisée en ce que** la proportion en surface des parties (13a) en MnO₂ et des parties (13b) en CeO₂ par rapport à la surface totale de la surface formant catalyseur est d'au moins 10 %, en étant de préférence comprise entre 30 et 60 %, et en étant notamment de 50 %.

9. Pièce suivant l'une des revendications 1 à 4,
**caractérisée en ce que** celle-ci où une couche qui y est déposée est en une matière (24) différente de CeO₂ et de MnO₂ et il y a dans celle-ci et/ou sur celle-ci des particules (25) qui mettent à disposition sur sa surface respectivement les parties (13b) en CeO₂ et les parties (13a) du MnO₂.

10. Pièce suivant l'une des revendications précédentes,
**caractérisée en ce que**
la pièce a une structure en forme de grille.

11. Pièce suivant la revendication 10,
**caractérisée en ce que**
la pièce est constituée sous la forme d'une grille d'aération, notamment d'une grille de sortie d'une hotte d'évacuation de fumée ou d'un générateur à plasma, qui peut être transversé par un courant.

12. Procédé de fabrication d'une surface (12) formant catalyseur sur une pièce par projection au gaz froid,
**caractérisé**
**en ce que** l'on produit la surface (12) formant catalyseur par projection de particules d'oxyde, ayant un mélange de particules de MnO₂ et de particules de CeO₂ ou de particules en CeO₂ et en MnO₂, les particules d'oxyde recouvrant seulement des parties (13) de la surface (12) formant catalyseur et mettant en outre à disposition des parties (14) métalliques en Ag ou en Ni ou en Co ou en Cu ou en Sn ou en Zn ou en des alliages d'au moins l'un de ces métaux de la surface formant catalyseur, qui sont voisines respectivement des parties (13) du MnO₂.

13. Procédé suivant la revendication 12,
**caractérisé en ce que** l'on utilise des particules de MnO₂ qui ont au moins en partie la forme γ du MnO₂ et on effectue la projection au gaz froid à des températures de fonctionnement en dessous de la température de décomposition de l'oxyde de manganèse.

14. Procédé suivant l'une des revendications 12 à 13,
**caractérisé en ce que**
l'on utilise pour les parties (14) métalliques de la surface formant catalyseur un mélange de particules d'oxyde et de particules métalliques en Ag ou en Ni ou en Co ou en Cu ou en Sn ou en Zn ou en des alliages d'au moins l'un de ces métaux.

15. Procédé suivant l'une des revendications 12 à 14,
**caractérisé en ce que** l'on se rend maître de la surface spécifique formant la surface formant catalyseur de la couche fabriqué par apport d'énergie dans le jet de gaz froid.

16. Utilisation d'une pièce suivant l'une des revendications 1 à 11 pour diminuer la teneur en ozone d'un gaz passant sur la surface formant catalyseur.
